# EUROPEAN PATENT SPECIFICATION

(11) **EP 2 852 476 B1**
(45) Date of publication and mention of the grant of the patent: **30.11.2016**
(21) Application number: 13725301.9
(22) Date of filing: 15.05.2013
(51) Int. Cl.: B26D 7/06, A23G 1/20, A23G 1/26, A23G 3/02, A23G 3/20, A23P 30/00

(54) **METHOD AND APPARATUS FOR STAMPING ARTICLES**
VERFAHREN UND VORRICHTUNG ZUM STEMPELN VON ARTIKELN
PROCEDE ET DISPOSITIF POUR L'ETAMPAGE DES ARTICLES

(30) Priority: 23.05.2012 GB 201209306
(43) Date of publication of application: 01.04.2015
(73) Proprietor: Kraft Foods R & D, Inc., Deerfield, IL 60015 (US)
(72) Inventor: GUSTAV, Thorsten, 81737 München (DE); JUNG, Christian, 81737 München (DE)
(74) Representative: Boult Wade Tennant
(86) International application number: PCT/EP2013/060015
(87) International publication number: WO 2013/174688

(56) References cited:
- EP-A1- 0 685 395
- EP-A1- 1 396 192
- DE-A1-102005 018 416
- US-A- 4 474 092

## Description

### Field of the Invention

The invention relates to a method for stamping a plurality of articles and to an apparatus for performing this method.

### Background Art

Current stamping lines, such as cold stamping lines, are stamping in one line with one or more stamping heads. The maximum article per minute speed is limited by the number of stamping heads and the distance over which the articles have to travel. Increasing the number of stamping heads increases the stamping cycle time but also increases the travel distance of the articles so that the article speed becomes the limiting factor for the line throughput. The article speeds of known cold stamping lines are limited to approximately 25 articles per minute.

EP-A-0 715 813 discloses methods and apparatuses for producing chocolate articles, wherein a plurality of cooled stamp elements are brought into contact with liquid chocolate mass contained in moulds, moved along the conveyance path of the moulds for a predetermined distance while maintaining the contact with the chocolate mass and subsequently taken out of the moulds. The stamp elements are disposed along the circumference of a rotating carrier device in such a way that they can be brought into contact with the moulds by continuous rotation of the device. Hence, no reciprocating movement of the stamp elements occurs. In some embodiments, the conveyance path of the moulds may comprise a bend or a loop.

The disclosure of US 5,006,358 relates to a method and an apparatus for the continuous automated production of dough products using a press apparatus with heated platens which move back and forth in the direction of travel of the dough products. Specifically, groups of dough balls are simultaneously released onto a feed belt so as to form rows and columns of evenly spaced dough units on the belt. The successive, evenly-spaced rows of dough balls are delivered to the region of the press apparatus, where the press platens are closed to flatten the dough, the press is moved along at the same rate of speed and in the same direction as the belt, subsequently the platens are opened and the press apparatus reverses to return to its original starting position.

Further, US-A-2011/0318475 discloses a method for forming thin edible pieces using two continuous belts which cooperate to form a fill cavity. One of these two belts has a plurality of cut-outs for forming the cavity walls which may be arranged in several parallel lanes. While the step of forming the thin edible pieces may be carried out in a plurality of parallel lines, a subsequent stamping step at a forming station is performed in a conventional manner using several stamping dies arranged in series in a single line or a rotating forming drum.

DE-A-10 2005 018 416 discloses a method and an apparatus for shaping confectionary products using a cold stamping unit. When a predetermined number of moulds containing confectionary products to be shaped have been conveyed into the cold stamping unit, the transport flow within the unit is stopped and a cold stamping process using a plurality of cooled stamp elements arranged in series is carried out. In order to compensate for the loss of time caused by this interruption of the mould transport, feeding flow converters are provided at the inlet and outlet sides of the cold stamping unit in order to enable an accelerated supply and discharge of moulds to and from the unit, respectively.

EP-B-0 981 280 discloses a cold stamping method for manufacturing edible products having an outer shell by flow moulding by means of a temperature-controlled punch that engages into a mould, wherein the punch and/or the mould are/is manufactured from a thermally highly conductive material and the dew point of the atmosphere surrounding the edible product is kept below the temperature of the punch.

The conference proceedings article "Frozen Cone Technology" by Allan Aasted, 51st P.M.C.A. Production Conference, 1997, pages 115 to 118, discloses a cold stamping method in which a frozen cone plunger is inserted into a liquid chocolate mass immediately after deposition thereof. The liquid chocolate squeezes up around the plunger, thus forming a chocolate shell. Since the plunger is cold, the shell cools immediately as the plunger is lowered into the mass. The frozen cone plunger may be cooled down to a low temperature of approximately +5° to -5° F (-15° to -21° C).

EP-A-0685395 describes a method and apparatus for supplying blanks to a packaging machine. The conveying unit includes a pair of parallel conveyers which can be run at different speeds so that one can act as a reservoir for stacks of blanks.

EP-B-4474092 describes an apparatus and method for conveying products, such as sliced luncheon meat, in two parallel paths at different flow rates. The paths are merged into a single path through which the products flow on a non-intermittent basis.

The known methods and apparatuses for stamping articles have the disadvantage of a limited line throughput. As has been mentioned above, this problem cannot be overcome by increasing the number of stamping heads due to the limited article speeds achievable in known stamping lines.

### Summary of the Invention

The present invention has been made in view of the problems identified above and it is an object of the invention to provide a method for stamping a plurality of articles which allows for a throughput of the articles to be increased. Further, the invention aims to provide an apparatus for performing this method. These goals are achieved by a method with the technical features of claim 1 and an apparatus with the technical features of claim 8. Preferred embodiments of the invention follow from the dependent claims.

The invention provides a method for stamping a plurality of articles, the method comprising the steps of transporting the plurality of articles along a first conveyance path and splitting a transport flow of the plurality of articles along the first conveyance path into at least two parallel transport lines so as to transport the plurality of articles along at least two parallel second conveyance paths. Further, the method comprises the steps of stamping the plurality of articles transported along the at least two parallel second conveyance paths using at least two parallel stamping units and merging transport flows of the plurality of articles along the at least two parallel second conveyance paths so as to transport the plurality of articles along a third conveyance path.

Herein, the term "stamping" refers to any type of process in which a predetermined pressure is applied to an article so as to impart a predetermined shape to the article. The term "parallel stamping units" defines that the stamping units are arranged in parallel, i.e., along the at least two parallel second conveyance paths, rather than in series along a single conveyance path.

One or more stamping units may be provided for each of the at least two parallel transport lines, the one or more stamping units being configured to stamp the plurality of articles transported along each of the at least two parallel second conveyance paths.

Since the stamping step is performed in parallel, by stamping the plurality of articles transported along the at least two parallel second conveyance paths using at least two parallel stamping units, the throughput of the stamping process is increased as compared to an arrangement where a single stamping unit having a plurality of stamping elements or stamping heads or a plurality of stamping units arranged in series are used.

For example, for the case of two parallel stamping units having the same number of stamping elements or stamping heads, the throughput of the method according to the invention is increased by 100% over an arrangement with a single stamping unit having the same number of stamping elements or stamping heads as each of the two parallel stamping units and by approximately 25% over an arrangement with a single stamping unit having twice as many stamping elements or stamping heads arranged in series as each of the two parallel stamping units.

The transport flow of the plurality of articles along the first conveyance path may be split into three or more, four or more or five or more parallel transport lines so as to transport the plurality of articles along three or more, four or more or five or more parallel second conveyance paths. In this case, the plurality of articles transported along the three or more, four or more or five or more parallel second conveyance paths may be stamped using three or more, four or more or five or more parallel stamping units. In this way, the throughput of the stamping process may be further increased.

After the stamping step has been performed, the transport flows of the plurality of articles along the at least two parallel second conveyance paths are merged, i.e., combined or united, so as to transport the plurality of articles along the third conveyance path. The transport flows of the plurality of articles along the at least two parallel second conveyance paths may be merged into a single transport line. Subsequently, further processing steps, such as cooling, heating, filling, coating or packaging, may be performed on the plurality of articles.

At least one, two, three or all of the stamping units may have a frame and one or more stamping heads or elements arranged on the frame. Further, at least one, two, three or all of the stamping units may comprise one or more lifting tables for lifting one or more of the plurality of articles transported along the at least two parallel second conveyance paths in a vertical direction and bringing the articles into contact with the one or more stamping heads or elements. Alternatively, the plurality of articles transported along the at least two parallel second conveyance paths may remain stationary in the vertical direction and the one or more stamping heads or elements may be moved vertically so as to be brought into contact with one or more of the plurality of articles.

In at least one, two, three or all of the stamping units, two or more stamping heads or elements may be arranged in series along the transport line so that two or more of the plurality of articles transported along at least one of the at least two parallel second conveyance paths are stamped substantially simultaneously in the stamping unit or the stamping units. The stamping heads or elements may be arranged so that each stamping head or element is configured to stamp one of the plurality of articles.

The plurality of articles may be continuously transported, i.e., without interruption of the transport flow, along the first conveyance path and/or the at least two parallel second conveyance paths and/or the third conveyance path. In this way, a particularly high throughput of the articles can be achieved.

The articles may be solid, semi-liquid or liquid articles, such as melted chocolate, caramel, toffee, candies or the like. The articles may be arranged in one or more containers or receptacles. In particular, for the case of semi-liquid or liquid articles, each of the articles may be disposed in a separate mould.

In one embodiment, the plurality of articles are stamped during transport along the at least two parallel second conveyance paths. Herein, the expression "during transport" defines that the plurality of articles are stamped while they are moving along the at least two parallel second conveyance paths. In this way, no interruption of the transport along the at least two parallel second conveyance paths occurs, further increasing the article throughput of the stamping process.

In this case, the at least two parallel stamping units may be configured to move, at least temporarily, in the same direction and with the same velocity as the transport flow of the plurality of articles transported along the at least two parallel second conveyance paths. For example, one or more of the stamping units may be provided with a frame which is movably supported, e.g., on a rail arrangement or the like, and driven to move, e.g., by a motor, such as a servo motor.

In another embodiment, the transport of the plurality of articles along the at least two parallel second conveyance paths is stopped before the articles are stamped and resumed after the stamping of the articles has been completed. In this case, the plurality of articles remain stationary in the transport direction along the at least two parallel second conveyance paths during the stamping process.

The plurality of articles transported along the at least two parallel second conveyance paths may be stamped substantially simultaneously. This can be achieved by synchronising the stamping steps performed by the at least two parallel stamping units, e.g., by using a control unit.

The plurality of articles may be transported along the first conveyance path in series. In this way, the step of splitting the transport flow of the plurality of articles along the first conveyance path into the at least two parallel transport lines so as to transport the plurality of articles along the at least two parallel second conveyance paths can be simplified.

The first conveyance path may be a single conveyance path. Moreover, the plurality of articles may be transported along the first conveyance path simultaneously in series and in parallel, e.g., by arranging a plurality of adjacent rows of articles on a conveyor belt or the like. In this way, the number of articles transported along the first conveyance path within a predetermined period of time can be increased.

The plurality of articles may be transported along the third conveyance path in series. In this way, a further processing of the articles may be simplified. The third conveyance path may be a single conveyance path.

The articles may be food products, in particular, confectionery products, such as sweets, chocolate, cookies, biscuits, toffee, caramel, candies, dairy products or the like. In one embodiment, the articles are semi-liquid or liquid confectionery products. In this case, confectionery shells, e.g., for filled confectionery products, may be produced by the stamping step.

The quality of some food products may deteriorate when they are exposed to atmosphere for an extended period of time. Hence, the increased article throughput and, thus, reduced production time achievable by the method of the invention are particularly advantageous for the use with food products.

In one embodiment, the stamping step is a cold stamping step. In this case, semi-liquid or liquid articles may be used which are at least partly solidified by cooling during the stamping step. Solidification of the articles may be achieved by using cooled stamp heads or elements. The stamp heads or elements may be cooled down to temperatures of 20° C or less, 10° C or less, 5° C or less, 0° C or less, -5° C or less, -10° C or less, -15° C or less, -20° C or less or -25° C or less. The stamp heads or elements may be made of a material with high thermal conductivity, such as a metal, e.g., copper, iron, steel or the like. In particular, confectionery shells for filled confectionery products may be produced by such a cold stamping step.

The invention further provides an apparatus for stamping a plurality of articles, the apparatus comprising a transport unit configured to transport the plurality of articles along a first conveyance path and a splitting unit configured to split a transport flow of the plurality of articles along the first conveyance path into at least two parallel transport lines so as to transport the plurality of articles along at least two parallel second conveyance paths.

The apparatus further comprises at least two parallel stamping units configured to stamp the plurality of articles transported along the at least two parallel second conveyance paths and a merging unit configured to merge transport flows of the plurality of articles along the at least two parallel second conveyance paths so as to transport the plurality of articles along a third conveyance path.

The transport unit may be a conveyor belt, a conveyor band, a feed belt or the like. The splitting unit and/or the merging unit may be provided in the form of a conveyor bifurcation, a conveyor junction, a conveyor branching or the like.

At least one of the at least two parallel stamping units may have one or more stamping heads or elements. In particular, as has been mentioned above, at least one, two, three or all of the stamping units may have a frame and one or more stamping heads or elements arranged on the frame. Further, at least one, two, three or all of the stamping units may comprise one or more lifting tables for lifting one or more of the plurality of articles transported along the at least two parallel second conveyance paths in a vertical direction and bringing the articles into contact with the one or more stamping heads or elements.

Alternatively, the plurality of articles transported along the at least two parallel second conveyance paths may remain stationary in the vertical direction and the one or more stamping heads or elements may be moved vertically so as to be brought into contact with one or more of the plurality of articles.

In at least one, two, three or all of the stamping units, two or more stamping heads or elements may be arranged in series along the transport line so that two or more of the plurality of articles transported along at least one of the at least two parallel second conveyance paths are stamped substantially simultaneously in the stamping unit or the stamping units. The stamping heads or elements may be arranged so that each stamping head or element is configured to stamp one of the plurality of articles.

The at least two parallel stamping units may have substantially identical configurations. However, alternatively, stamping units with different configurations may be used. For example, the stamping units may differ in the number and/or the arrangement of the stamping heads or elements.

The apparatus according to the invention provides the advantageous effects already described in detail above for the method of the invention.

The at least two stamping units may be configured to stamp the plurality of articles during transport along the at least two parallel second conveyance paths. Herein, the expression "during transport" defines that the at least two stamping units are configured to stamp the plurality of articles while they are moving along the at least two parallel second conveyance paths.

In one embodiment, the at least two stamping units are configured to stamp the plurality of articles transported along the at least two parallel second conveyance paths substantially simultaneously. This may be achieved by synchronising the at least two parallel stamping units, e.g., by using a control unit.

The transport unit may be configured to transport the plurality of articles along the first conveyance path in series.

The apparatus of the invention may be configured to transport the plurality of articles along the third conveyance path in series.

The articles may be food products. In this case, the advantageous effects already described in detail above for the method of the invention can be achieved.

In one embodiment, the at least two parallel stamping units are cold stamping units. In this case, semi-liquid or liquid articles may be at least partly solidified by cooling in the at least two stamping units. Solidification of the articles may be achieved by using stamping units having cooled stamp heads or elements. In particular, confectionery shells for filled confectionery products may be produced by using such an apparatus.

The apparatus of the invention is an apparatus for performing the method of the invention. Hence, the further features disclosed in connection with the above description of the method may also be applied to the apparatus of the invention.

### Brief Description of the Drawings

Hereinafter, non-limiting examples are explained with reference to the drawings, in which:
Fig. 1 shows a schematic view of an apparatus according to an embodiment of the present invention; and
Figs. 2(a) and (b) show diagrams illustrating the movements of the stamping units of the apparatus shown in Fig. 1 prior to, during and after the stamping step.

### Detailed Description of Currently Preferred Embodiments

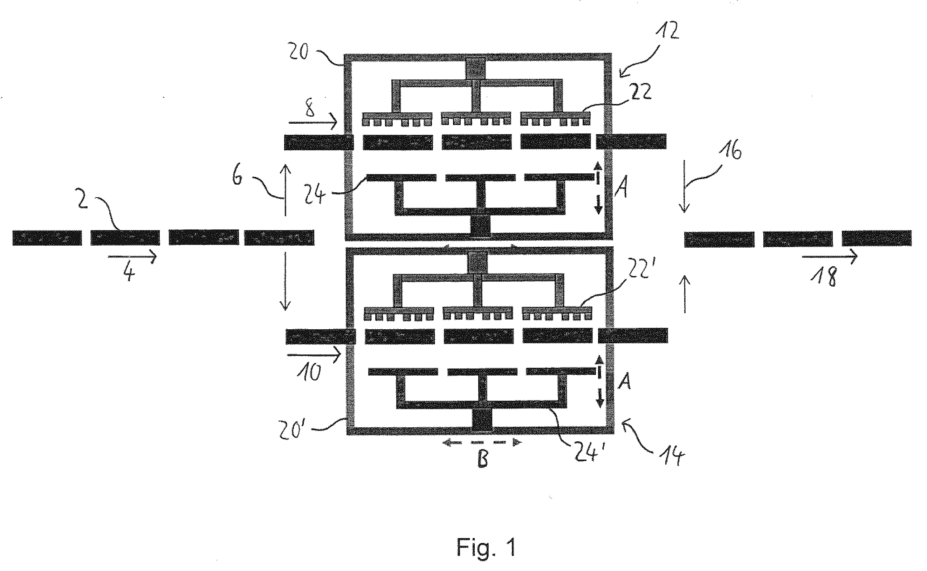

Figure 1 shows a schematic view of an apparatus according to an embodiment of the present invention.

The apparatus comprises a first transport unit (not shown), such as a conveyor belt, configured to transport a plurality of articles 2 along a first conveyance path 4 and a splitting unit 6, such as a branching or bifurcation of a conveyor belt, configured to split a transport flow of the plurality of articles 2 along the first conveyance path 4 into two parallel transport lines so as to transport the plurality of articles 2 along two parallel second conveyance paths 8, 10. The plurality of articles 2 are transported along the two parallel second conveyance paths 8, 10 by two parallel second transport units (not shown), such as conveyor belts.

The apparatus further comprises two parallel stamping units 12, 14 configured to stamp the plurality of articles 2 transported along the two parallel second conveyance paths 8, 10 and a merging unit 16 configured to merge transport flows of the plurality of articles 2 along the two parallel second conveyance paths 8, 10 so as to transport the plurality of articles 2 along a third conveyance path 18. The plurality of articles 2 are transported along the third conveyance path 18 by a third transport unit (not shown), such as a conveyor belt.

The articles 2 may be food products, in particular, confectionery products, such as sweets, chocolate, cookies, biscuits, toffee, caramel, candies, dairy products or the like. In particular, the articles 2 may be semi-liquid or liquid confectionery products, such as melted chocolate, caramel, toffee, candies or the like. In this case, confectionery shells, e.g., for filled confectionery products, may be produced by the stamping units 12, 14.

The articles 2 may be arranged in one or more containers or receptacles. In particular, for the case of semi-liquid or liquid articles, each of the articles 2 may be disposed in a separate mould.

In the following, the configuration of the stamping units 12, 14 is described with reference to Fig. 1. As is schematically shown in Fig. 1, stamping units 12, 14 with substantially identical configurations are used in the apparatus of the present embodiment. However, alternatively, stamping units 12, 14 with different configurations may be used.

The stamping units 12, 14 each have a frame 20, 20' and three stamping heads 22, 22' arranged on the frame 20, 20'. The stamping heads 22, 22' are secured to the frame 20, 20' in a stationary manner. Further, the stamping units 12, 14 each comprise a lifting table 24, 24' for simultaneously lifting three of the plurality of articles 2 transported along the two parallel second conveyance paths 8, 10 in a vertical direction and bringing the articles 2 into contact with the stamping heads 22, 22'. The lifting tables 24, 24' are movably attached to the frames 20, 20' and driven by a drive unit (not shown), e.g., a motor, such as a servo motor.

In the stamping units 12, 14, the three stamping heads 22, 22' are arranged in series along the transport lines of the articles 2 so that three of the plurality of articles 2 transported along the two parallel second conveyance paths 8, 10 are stamped substantially simultaneously in the stamping units 12, 14 by the lifting action of the lifting tables 24, 24'. The stamping heads 22, 22' are arranged so that each stamping head 22, 22' is configured to stamp one of the plurality of articles 2. The stamping units 12, 14 may have the same number of stamping heads 22, 22', as is shown in Fig. 1, or a different number of stamping heads 22, 22'.

The stamping units 12, 14 may be cold stamping units with cooled stamping heads 22, 22'. For example, the stamping heads 22, 22' may be cooled by cooling water supplied via the frame 20, 20'. In this case, semi-liquid or liquid articles 2 may be at least partly solidified by cooling in the stamping units 12, 14 by the cooled stamping heads 22, 22'. In particular, confectionery shells for filled confectionery products may be produced by using such a configuration.

The apparatus is configured so that the plurality of articles 2 are continuously transported, i.e., without interruption of the transport flow, along the first conveyance path 4, the two parallel second conveyance paths 8, 10 and the third conveyance path 18. In this way, a particularly high throughput of the articles 2 can be achieved.

In operation of the apparatus, the plurality of articles 2 are transported in series along the first conveyance path 4 by the transport unit. The transport flow of the plurality of articles 2 along the first conveyance path 4 is split into two parallel transport lines by the splitting unit 6 so as to transport the plurality of articles 2 along the two parallel second conveyance paths 8, 10. The plurality of articles 2 are conveyed to the two parallel stamping units 12, 14 by the two parallel second transport units.

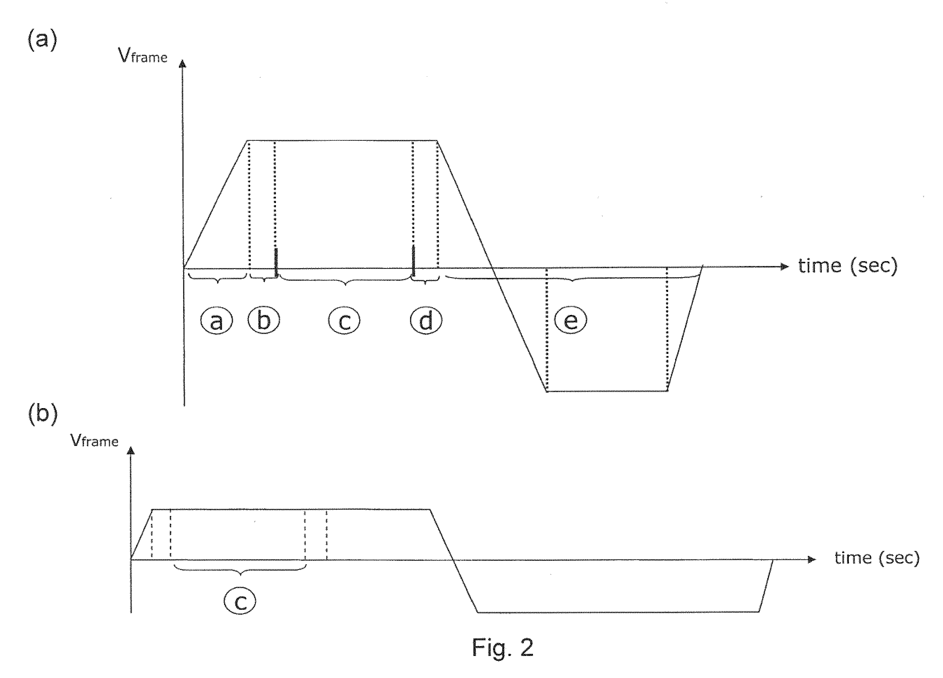

In the two stamping units 12, 14, the plurality of articles 2 are stamped during transport along the two parallel second conveyance paths 8, 10, i.e., while they are moving along the two parallel second conveyance paths 8, 10. The two stamping units 12, 14 are configured to move temporarily in the same direction and with the same velocity as the transport flow of the plurality of articles 2 transported along the two parallel second conveyance paths 8, 10. Specifically, the frames 20, 20' of the stamping units 12, 14 are movably supported, e.g., on rail arrangements, and driven to move in the horizontal direction (indicated by arrows B in Fig. 1), e.g., by motors, such as servo motors. The details of the movements of the stamping units 12, 14 in the stamping process will be described below with reference to Figs. 2(a) and (b).

The stamping of the plurality of articles is performed by simultaneously lifting, in each of the two stamping units 12, 14, three of the plurality of articles 2 transported along the two parallel second conveyance paths 8, 10 by moving the lifting tables 24, 24' in the vertical direction (indicated by arrows A in Fig. 1) and bringing the articles 2 into contact with the stamping heads 22, 22'. The articles 2 are pressed against the stamping heads 22, 22' for a predetermined period of time by the lifting tables 24, 24' while the stamping units 12, 14 are moving along the two parallel second conveyance paths 8, 10 with the same velocity as the transport flow of the plurality of articles 2. After the predetermined period of time, the lifting tables 24, 24' are lowered and brought back into their initial positions and the stamped articles 2 are conveyed further along the two second conveyance paths 8, 10.

The transport flows of the plurality of stamped articles 2 along the two parallel second conveyance paths 8, 10 are merged by the merging unit 16 so as to transport the plurality of articles 2 in series along the third conveyance path 18. Subsequently, further processing steps, such as cooling, heating, filling, coating or packaging, may be performed on the plurality of stamped articles 2.

The plurality of articles 2 are transported along the first, second and third conveyance paths 4, 8, 10, 18 with an article speed of 25 articles per minute or more.

Figures 2(a) and (b) show diagrams illustrating the movements of the stamping units 12, 14 of the apparatus shown in Fig. 1 prior to, during and after the stamping step, i.e., in one stamping cycle. The abscissas of the diagrams show the time in seconds and the ordinates of the diagrams show the velocity v_{frame} of the movement of the stamping units 12, 14 in the horizontal direction (arrows B in Fig. 1). Figure 2(a) illustrates the stamping process for a higher article speed, such as 25 articles 2 per minute, and Fig. 2(b) illustrates the stamping process for a lower article speed, such as 15 articles 2 per minute. The different steps or phases of the stamping cycle are denoted in Figs. 2(a) and (b) by encircled characters a to e.

At the start of the stamping cycle, i.e., for a time of zero seconds, the stamping units 12, 14 are in a static state so that v_{frame} is zero, as is shown in Fig. 2(a). In a first step *a*, the stamping units 12, 14 are accelerated in the direction of the continuous transport flows of the articles 2 along the second conveyance paths 8, 10 in order to synchronise their movements with the transport flows. At the end of step *a*, v_{frame} equals the article speed, e.g., 25 articles 2 per minute in Fig. 2(a). The velocity of the movement of the stamping units 12, 14 remains constant at this level throughout the subsequent steps *b* to d. For an article speed of 25 articles 2 per minute, the duration of step *a* may be 0.8 seconds.

In the following step b, three of the plurality of articles 2 transported along the two parallel second conveyance paths 8, 10 are lifted by moving the lifting tables 24, 24' in the vertical direction (arrows A in Fig. 1) and brought into contact with the stamping heads 22, 22'. For an article speed of 25 articles 2 per minute, the duration of step b may be 0.4 seconds.

Subsequently, in the stamping step c, the articles 2 are pressed against the stamping heads 22, 22' for a predetermined period of time by the lifting tables 24, 24' while the stamping units 12, 14 are moving along the two parallel second conveyance paths 8, 10 with the same velocity as the transport flow of the plurality of articles 2. For an article speed of 25 articles 2 per minute, the duration of step *c* may be 2.5 seconds.

After the above predetermined period of time, in step d, the lifting tables 24, 24' are lowered and eventually brought back into their initial positions and the stamped articles 2 are conveyed further along the two second conveyance paths 8, 10, while the stamping units 12, 14 are still moving along the second conveyance paths 8, 10 with the same velocity as the transport flow of the plurality of articles 2. For an article speed of 25 articles 2 per minute, the duration of step d may be 0.4 seconds.

In the subsequent step e, the stamping units 12, 14 are first decelerated and then accelerated in a direction opposite to the direction of the continuous transport flows of the articles 2 along the second conveyance paths 8, 10, in order to return the stamping units 12, 14 to their initial positions. Specifically, as is schematically shown in Fig. 2(a), the stamping units 12, 14 are accelerated to a velocity v_{frame} which is higher than the article speed, e.g., higher than 25 articles 2 per minute, then moved at this velocity for a predetermined period of time and subsequently decelerated until they reach a static state so that v_{frame} is zero. Once the stamping units 12, 14 have reached their initial positions, a new stamping cycle can begin. For an article speed of 25 articles 2 per minute, the duration of step e may be 3.1 seconds, resulting in a total time of one stamping cycle of 7.2 seconds.

As can be seen from a comparison between Figs. 2(a) and (b), for a lower article speed, the total time of one stamping cycle increases, e.g., to 12 seconds for an article speed of 15 articles 2 per minute, while the duration of the stamping step c remains unchanged.

As directly follows from the explanations provided above, the throughput of a stamping unit 12, 14 cannot be increased by increasing the number of stamping heads 22, 22' arranged in series along the transport line of the articles 2. While, in this case, the number of articles 2 simultaneously stamped by the stamping heads 22, 22' in one stamping cycle increases, the distance over which the articles 2 have to travel before a new stamping cycle can start increases accordingly. Hence, the duration of step e increases so that no increase in article throughput can be achieved.

The method and the apparatus of the present invention overcome this problem by providing a parallel stamping arrangement as detailed above, thus achieving an increased article throughput and a reduced production time. In this way, article speeds of more than 25 articles per minute can be realised.

## Claims

1. A method for stamping a plurality of articles (2), the method comprising the steps of
transporting the plurality of articles (2) along a first conveyance path (4),
splitting a transport flow of the plurality of articles (2) along the first conveyance path (4) into at least two parallel transport lines so as to transport the plurality of articles (2) along at least two parallel second conveyance paths (8, 10),
stamping the plurality of articles (2) transported along the at least two parallel second conveyance paths (8, 10) using at least two parallel stamping units (12, 14), and
merging transport flows of the plurality of articles (2) along the at least two parallel second conveyance paths (8, 10) so as to transport the plurality of articles (2) along a third conveyance path (18).

2. The method according to claim 1, wherein the plurality of articles (2) are stamped during transport along the at least two parallel second conveyance paths (8, 10).

3. The method according to claim 1 or 2, wherein the plurality of articles (2) transported along the at least two parallel second conveyance paths (8, 10) are stamped substantially simultaneously.

4. The method according to any one of the preceding claims, wherein the plurality of articles (2) are transported along the first conveyance path (4) in series.

5. The method according to any one of the preceding claims, wherein the plurality of articles (2) are transported along the third conveyance path (18) in series.

6. The method according to any one of the preceding claims, wherein the articles (2) are food products.

7. The method according to any one of the preceding claims, wherein the stamping step is a cold stamping step.

8. An apparatus for stamping a plurality of articles (2), the apparatus comprising
a transport unit configured to transport the plurality of articles (2) along a first conveyance path (4),
a splitting unit (6) configured to split a transport flow of the plurality of articles (2) along the first conveyance path (4) into at least two parallel transport lines so as to transport the plurality of articles (2) along at least two parallel second conveyance paths (8, 10),
at least two parallel stamping units (12, 14) configured to stamp the plurality of articles (2) transported along the at least two parallel second conveyance paths (8, 10), and
a merging unit (16) configured to merge transport flows of the plurality of articles (2) along the at least two parallel second conveyance paths (8, 10) so as to transport the plurality of articles (2) along a third conveyance path (18).

9. The apparatus according to claim 8, wherein the at least two stamping units (12, 14) are configured to stamp the plurality of articles (2) during transport along the at least two parallel second conveyance paths (8, 10).

10. The apparatus according to claim 8 or 9, wherein the at least two stamping units (12, 14) are configured to stamp the plurality of articles (2) transported along the at least two parallel second conveyance paths (8, 10) substantially simultaneously.

11. The apparatus according to any one of claims 8 to 10, wherein the transport unit is configured to transport the plurality of articles (2) along the first conveyance path (4) in series.

12. The apparatus according to any one of claims 8 to 11, wherein the apparatus is configured to transport the plurality of articles (2) along the third conveyance path (18) in series.

13. The apparatus according to any one of claims 8 to 12, wherein the at least two parallel stamping units (12, 14) are cold stamping units.

14. The apparatus according to any one of claims 8 to 13, wherein at least one of the at least two parallel stamping units (12, 14) has one or more stamping heads (22, 22').

## Patentansprüche

1. Verfahren zum Prägen einer Vielzahl von Gegenständen (2), wobei das Verfahren die folgenden Schritte umfasst:
Transportieren der Vielzahl von Gegenständen (2) entlang eines ersten Beförderungswegs (4),
Aufteilen eines Transportstroms der Vielzahl von Gegenständen (2) entlang des ersten Beförderungswegs (4) in mindestens zwei parallele Transportstrecken, um die Vielzahl von Gegenständen (2) entlang von mindestens zwei parallelen zweiten Beförderungswegen zu transportieren (8, 10),
Prägen der Vielzahl von Gegenständen (2), die entlang der mindestens zwei parallelen zweiten Beförderungswege (8, 10) transportiert werden, unter Verwendung von mindestens zwei parallelen Prägeeinheiten (12, 14), und
Zusammenführen der Transportströme der Vielzahl von Gegenständen (2) entlang der mindestens zwei parallelen zweiten Beförderungswege (8, 10), um die Vielzahl von Gegenständen (2) entlang eines dritten Beförderungswegs (18) zu transportieren.

2. Verfahren nach Anspruch 1, wobei die Vielzahl von Gegenständen (2) während des Transports entlang der mindestens zwei parallelen zweiten Beförderungswege (8, 10) geprägt werden.

3. Verfahren nach Anspruch 1 oder 2, wobei die Vielzahl von Gegenständen (2), die entlang der mindestens zwei parallelen zweiten Beförderungswege (8, 10) transportiert werden, im Wesentlichen gleichzeitig geprägt werden.

4. Verfahren nach einem der vorangehenden Ansprüche, wobei die Vielzahl von Gegenständen (2) entlang des ersten Beförderungswegs (4) hintereinander transportiert werden.

5. Verfahren nach einem der vorangehenden Ansprüche, wobei die Vielzahl von Gegenständen (2) entlang des dritten Beförderungswegs (18) hintereinander transportiert werden.

6. Verfahren nach einem der vorangehenden Ansprüche, wobei die Gegenstände (2) Lebensmittelprodukte sind.

7. Verfahren nach einem der vorangehenden Ansprüche, wobei der Prägeschritt ein Kaltprägeschritt ist.

8. Vorrichtung zum Prägen einer Vielzahl von Gegenständen (2), wobei die Vorrichtung Folgendes umfasst:
eine Transporteinheit, die konfiguriert ist, um die Vielzahl von Gegenständen (2) entlang eines ersten Beförderungswegs (4) zu transportieren,
eine Aufteileinheit (6), die konfiguriert ist, um einen Transportstrom der Vielzahl von Gegenständen (2) entlang des ersten Beförderungswegs (4) in mindestens zwei parallele Transportstrecken aufzuteilen, um die Vielzahl von Gegenständen (2) entlang von mindestens zwei parallelen zweiten Beförderungswege zu transportieren (8, 10),
mindestens zwei parallele Prägeeinheiten (12, 14), die konfiguriert sind, um die Vielzahl von Gegenständen (2), die entlang der mindestens zwei parallelen zweiten Beförderungswege (8, 10) transportiert werden, zu prägen, und
eine Zusammenführeinheit (16), die konfiguriert ist, um die Transportströme der Vielzahl von Gegenständen (2) entlang der mindestens zwei parallelen zweiten Beförderungswege (8, 10) zusammenzuführen, so dass die Vielzahl von Gegenständen (2) entlang eines dritten Beförderungswegs (18) transportiert wird.

9. Vorrichtung nach Anspruch 8, wobei die mindestens zwei Prägeeinheiten (12, 14) konfiguriert sind, um die Vielzahl von Gegenständen (2) während des Transports entlang der mindestens zwei parallelen zweiten Beförderungswege (8, 10) zu prägen.

10. Vorrichtung nach Anspruch 8 oder 9, wobei die mindestens zwei Prägeeinheiten (12, 14) konfiguriert sind, um die Vielzahl von Gegenständen (2), die entlang der mindestens zwei parallelen zweiten Beförderungswege (8, 10) transportiert werden, im Wesentlichen gleichzeitig zu prägen.

11. Vorrichtung nach einem der vorangehenden Ansprüche 8 bis 10, wobei die Transporteinheit konfiguriert ist, um die Vielzahl von Gegenständen (2) entlang des ersten Beförderungswegs (4) hintereinander zu transportieren.

12. Vorrichtung nach einem der vorangehenden Ansprüche 8 bis 11, wobei die Vorrichtung konfiguriert ist, um die Vielzahl von Gegenständen (2) entlang des dritten Beförderungswegs (18) hintereinander zu transportieren.

13. Vorrichtung nach einem der vorangehenden Ansprüche 8 bis 12, wobei die mindestens zwei parallelen Prägeeinheiten (12, 14) Kaltprägeeinheiten sind.

14. Vorrichtung nach einem der vorangehenden Ansprüche 8 bis 13, wobei mindestens eine der mindestens zwei parallelen Prägeeinheiten (12, 14) einen oder mehrere Prägeköpfe (22, 22') aufweist.

## Revendications

1. Procédé d'estampage d'une pluralité d'articles (2), le procédé comprenant les étapes consistant à
transporter la pluralité d'articles (2) le long d'une première trajectoire de transport (4),
fractionner un flux de transport de la pluralité d'articles (2) le long de la première trajectoire de transport (4) en au moins deux lignes de transport parallèles de façon à transporter la pluralité d'articles (2) le long d'au moins deux deuxièmes trajectoires de transport parallèles (8, 10),
estamper la pluralité d'articles (2) transportés le long desdites au moins deux deuxièmes trajectoires de transport parallèles (8, 10) en utilisant au moins deux unités d'estampage parallèles (12, 14), et
réunir les flux de transport de la pluralité d'articles (2) le long des au moins deux deuxièmes trajectoires de transport parallèles (8, 10) de façon à transporter la pluralité d'articles (2) le long d'une troisième trajectoire de transport (18).

2. Procédé selon la revendication 1, dans lequel la pluralité d'articles (2) est estampée pendant le transport le long des au moins deux deuxièmes trajectoires de transport parallèles (8, 10).

3. Procédé selon la revendication 1 ou 2, dans lequel la pluralité d'articles (2) transportés le long des au moins deux deuxièmes trajectoires de transport parallèles (8, 10) est estampée essentiellement en même temps.

4. Procédé selon l'une quelconque des revendications précédentes, dans lequel la pluralité d'articles (2) est transportée le long de la première trajectoire de transport (4) en série.

5. Procédé selon l'une quelconque des revendications précédentes, dans lequel la pluralité d'articles (2) est transportée le long de la troisième trajectoire de transport (18) en série.

6. Procédé selon l'une quelconque des revendications précédentes, dans lequel les articles (2) sont des produits alimentaires.

7. Procédé selon l'une quelconque des revendications précédentes, dans lequel l'étape d'estampage est une étape d'estampage à froid.

8. Appareil d'estampage d'une pluralité d'articles (2), l'appareil comprenant
une unité de transport conçue pour transporter la pluralité d'articles (2) le long d'une première trajectoire de transport (4),
une unité de fractionnement (6) conçue pour fractionner un flux de transport de la pluralité d'articles (2) le long de la première trajectoire de transport (4) en au moins deux lignes de transport parallèles de façon à transporter la pluralité d'articles (2) le long d'au moins deux deuxièmes trajectoires de transport parallèles (8, 10),
au moins deux unités d'estampage parallèles (12, 14) conçues pour estamper la pluralité d'articles (2) transportés le long des au moins deux deuxièmes trajectoires de transport parallèles (8, 10), et
une unité de réunion (16) conçue pour réunir les flux de transport de la pluralité d'articles (2) le long des au moins deux deuxièmes trajectoires de transport parallèles (8, 10) de façon à transporter la pluralité d'articles (2) le long d'une troisième trajectoire de transport (18).

9. Appareil selon la revendication 8, dans lequel lesdites au moins deux unités d'estampage (12, 14) sont conçues pour estamper la pluralité d'articles (2) pendant le transport le long des au moins deux deuxièmes trajectoires de transport parallèles (8, 10).

10. Appareil selon la revendication 8 ou 9, dans lequel lesdites au moins deux unités d'estampage (12, 14) sont conçues pour estamper la pluralité d'articles (2) transportés le long des au moins deux deuxièmes trajectoires de transport parallèles (8, 10) essentiellement en même temps.

11. Appareil selon l'une quelconque des revendications 8 à 10, dans lequel l'unité de transport est conçue pour transporter la pluralité d'articles (2) le long de la première trajectoire de transport (4) en série.

12. Appareil selon l'une quelconque des revendications 8 à 11, où l'appareil est conçu pour transporter la pluralité d'articles (2) le long de la troisième trajectoire de transport (18) en série.

13. Appareil selon l'une quelconque des revendications 8 à 12, dans lequel les au moins deux unités d'estampage parallèles (12, 14) sont des unités d'estampage à froid.

14. Appareil selon l'une quelconque des revendications 8 à 13, dans lequel au moins l'une des au moins deux unités d'estampage parallèles (12, 14) comporte une ou plusieurs têtes d'estampage (22, 22').
